**Europäisches Patentamt**

**European Patent Office**

**Office européen des brevets**

(19)

(11) Publication number : **0 441 117 B1**

# EUROPEAN PATENT SPECIFICATION

(12)

(45) Date of publication of patent specification :
**18.10.95 Bulletin 95/42**

(51) Int. Cl.[6] : **G03B 7/16**

(21) Application number : **91100108.9**

(22) Date of filing : **02.01.91**

(54) **Camera exposure calculation device.**

Divisional application 94120702.9 filed on 02/01/91.

(30) Priority : **05.01.90 JP 111/90**

(43) Date of publication of application :
**14.08.91 Bulletin 91/33**

(45) Publication of the grant of the patent :
**18.10.95 Bulletin 95/42**

(84) Designated Contracting States :
**DE FR GB**

(56) References cited :
**EP-A- 0 111 635**
**DE-A- 3 732 459**
**GB-A- 2 055 005**
**JP-A- 1 154 133**

(56) References cited :
**US-A- 4 445 778**
**US-A- 4 534 636**
**US-A- 4 534 639**
**US-A- 4 951 082**
**US-A- 4 963 915**

(73) Proprietor : **NIKON CORPORATION**
**2-3, Marunouchi 3-chome**
**Chiyoda-ku**
**Tokyo (JP)**

(72) Inventor : **Takagi, Tadao**
**18-3-7-302, Utsukushigaoka 1-chome,**
**Midori-ku**
**Yokohama-ku, Yokohama-shi, Kanagawa-ken**
**(JP)**

(74) Representative : **Grünecker, Kinkeldey,**
**Stockmair & Schwanhäusser Anwaltssozietät**
**Maximilianstrasse 58**
**D-80538 München (DE)**

EP 0 441 117 B1

## Description

## BACKGROUND OF THE INVENTION

### Field of the Invention

The present invention relates to a camera according to the preamble of claim 1.

### Related Background Art

It is significant in setting a proper exposure to obtain information relating to a type of a principal object, for example, an object to be photographed by close-up, person or scenery, as information for the calculation of exposure. In U.S. patent No. 4,951,082 published on Aug.21, 1990 and assigned to the assignee of the present invention, the principal object is classified by a photographing magnification and a proper exposure is calculated based on the classification result. More specifically, when the magnification $f/x$ is smaller than $1/100$, it is classified as a scenery scene, when the magnification is $1/100 \leqq f/x < 1/20$, it is classified as a person scene, and when the magnification is $1/20 \leqq f/x$, it is classified as a close-up scene. After the classification, appropriate calculation is effected to calculate the exposure.

In the prior art, the classification of the scene is based on the assumption that the scene has a large number in a collection of statistics. However, a different scene from the statistically set scene classification naturally occurs in a range. Accordingly, in the scene classification method, a certain range of misjudgement is included by probability.

A camera having the features as recited in the preamble of claim 1 is known from US 4534639. This known camera, which is a single lens reflex camera, has an exposure mode change-over device which can select one exposure mode out of a variety of exposure modes. Furthermore, the camera comprises a light measuring mode setting circuit. Thus a light measuring mode of the camera suited for a set exposure mode can be selected according to the setting of the exposure mode.

It is an object of the present invention to improve the probability of attaining a proper exposure by eliminating misjudgement by classification by not depending on the scene classification.

This object is achieved by the features as set forth in claim 1.

In the present invention, the brightness output to be used for the exposure calculation is selected from the brightness outputs generated by the light metering device based on the output of the photographing scene setting device which is set by a photographer. Accordingly, the range of the principal object can be more precisely determined than by the classification method.

## BRIEF DESCRIPTION OF THE DRAWINGS

Fig. 1 shows a block diagram of an embodiment of the present invention,

Figs. 2A to 2C show detail of a calculation process in the embodiment of the present invention,

Figs. 3A and 3B show positional relationship of $N_C$, $N_L$ and $N_R$ on photo-electric conversion device arrays 3a to 3d, and

Fig. 4 shows a positional relationship between an image screen and the photo-electric conversion device arrays 3.

## DETAILED DESCRIPTION OF THE PREFERRED EMBODIMENTS

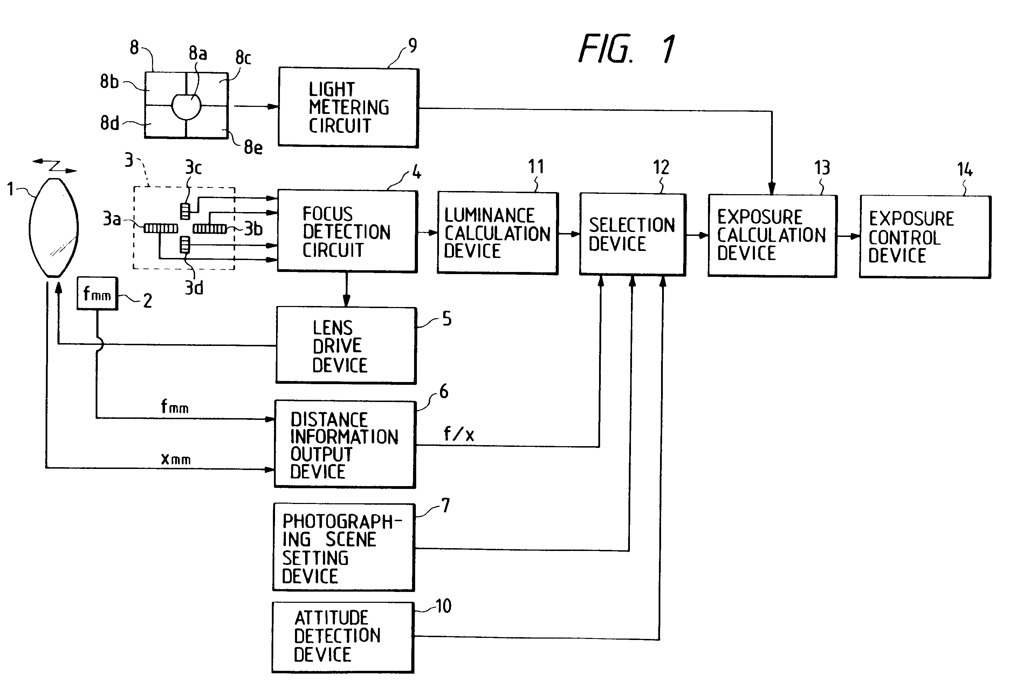

An embodiment of the present invention is now explained with reference to Fig. 1.

Fig. 1 shows a block diagram of the embodiment of the present invention. An imaging lens 1 receives a light from an object field. The incident light passes through the imaging lens 1 and is split by a half-mirror (not shown) in a known manner. One portion of the light is directed to a light metering element 8 and the other portion is directed to photo-electric conversion device arrays 3 for detecting focus, through a known optical system (not shown).

A ROM 2 in the lens stores a focal distance f (mm) of the imaging lens 1.

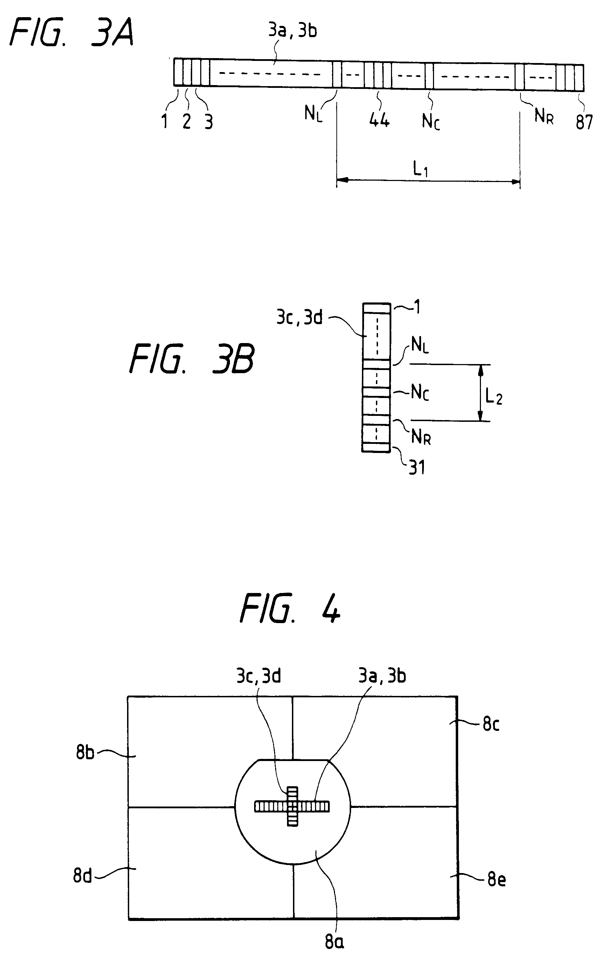

The light metering element 8 is a photo-electric conversion device made of a silicon photo-diode (SPD) which generates a light metering output in response to a light from an object. An object field is divided into five areas and five photo-electric conversion devices 8a to 8e each corresponding to each area are provided. Positions on an image screen of the five photo-electric conversion devices 8a to 8e are shown in Fig. 4.

A light metering circuit 9 receives the light metering outputs from the five photo-electric conversion devices 8a to 8e, calculates respective brightnesses and generates corresponding brightness outputs.

A light metering device (a portion of which is not shown) primarily comprises the light metering element 8 and the light metering circuit 9.

The photo-electric conversion device arrays 3 are used for detecting focus. They comprises a pair of photo-electric conversion device arrays 3a and 3b arranged horizontally on the corresponding screen, and a pair of photo-electric conversion device arrays 3c and 3d arranged vertically, that is, four photo-electric conversion device arrays in total. Each photo-electric conversion device array comprises a plurality of parallel charge storing photo-electric conversion devices (CCD) (hereinafter simply referred to as devices).

The four photo-electric conversion device arrays are arranged on a plane on which a light transmitted through the imaging lens 1 focused through four recoupling lenses (not shown) arranged in a cross shape. At this time, the images of the four photo-electric conversion device arrays on the screen or the predetermined focal plane of the imaging lens 1, the pair of horizontally arranged photo-electric conversion device arrays 3a and 3d and the pair of vertically arranged photo-electric conversion device arrays 3c and 3d overlap to each other, respectively, to form a cross area shown in Fig. 4. This area is a subject of distance measurement. This is disclosed in U.S. Serial No. 370,993 filed on September 26, 1989 and assigned to the assignee of the present invention.

Photo-electrically converted outputs generated by the devices of the photo-electric conversion device arrays 3 are supplied to a focus detection circuit 4. Normally, the same number of photo-electrically converted outputs as the number of devices of the photo-electric conversion device arrays 3 are supplied. A calculation is carried out to detect the focus.

A focus detection device (a portion of which is not shown) primarily comprises a photo-electric conversion device arrays 3 and the focus detection circuit 4.

The outputs from the photo-electric conversion device arrays 3 are supplied to the focus detection circuit 4 which generates focus detection outputs, which are sent to a lens driver 5 as focal position information.

A lens drive motor (not shown) which is a component of the lens driver 5 is driven in accordance with the focus detection result so that the imaging lens 1 is driven to a detected in-focus position.

A brightness calculation device 11 calculates brightness values based on the photo-electrically converted outputs and produces corresponding brightness outputs. In the present embodiment, a storage time required for each device to store a predetermined amount of charge is detected, and the brightness value is calculated by dividing the stored charge by the storage time. However, the present invention is not limited to the above method. For example, the charge stored in a predetermined time may be converted to a brightness value. A reference device (not shown) or a color temperature measuring device (not shown) may be provided as required to correct the brightness value.

The brightness outputs calculated by the brightness calculation device 11 and the focus detection output are supplied to the selection device 12.

A distance information output device 6 provides a photographing distance for the driven imaging lens 1, which is normally a distance x (mm) from an aperture plane of a camera to an object, through the imaging lens 1 and a focal length f (mm) of the imaging lens 1 through the ROM 2 in the lens. The focal length f (mm) is divided by the distance x (mm) to calculate a photographing magnification f/x, and a photographing magnification output is sent to the selection device 12. The distance information is not limited to the one described above but an exit pupil distance may be used.

A photographing scene setting device 7 is used by a photographer to set various photographing scenes such as portrait, sport, scenery, close-up and evening scene. The camera controls an aperture, a shutter speed, an exposure value and an angle of view in accordance with the setting. An individual electric or magnetic card may be selectively inserted into the camera to set the scene, or a setting member mounted on the camera may be manipulated to select and set the scene. A photographing scene setting device 7 produces a signal representing the result of setting and supplies it to the selection device 12.

An attitude detection device 10 detects an attitude of the camera, for example, a horizontal attitude or a vertical attitude, by a known vertical attitude sensor and sends the detection result to the selection device 12.

The selection device 12 selects a brightness output from the brightness outputs supplied from a brightness conversion device 11 based on the outputs of the distance information output device 6, the photographing scene setting device 7 and the attitude detection device 10, and sends it to an exposure calculation device 13.

The exposure calculation device 13 receives the selected brightness output and the outputs of the five photo-electric conversion devices 8a to 8e from the light metering circuit 9 and calculates a proper exposure value, and supplies it to an exposure control device 14.

The exposure control device 14 controls a shutter (not shown) and an aperture (not shown) in accordance with the proper exposure value.

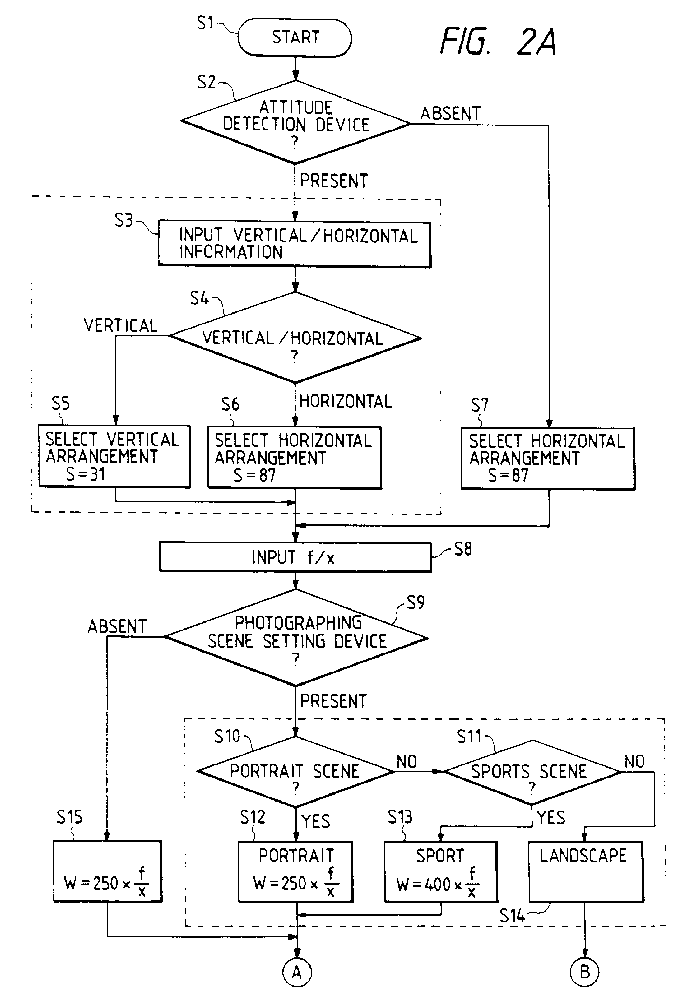

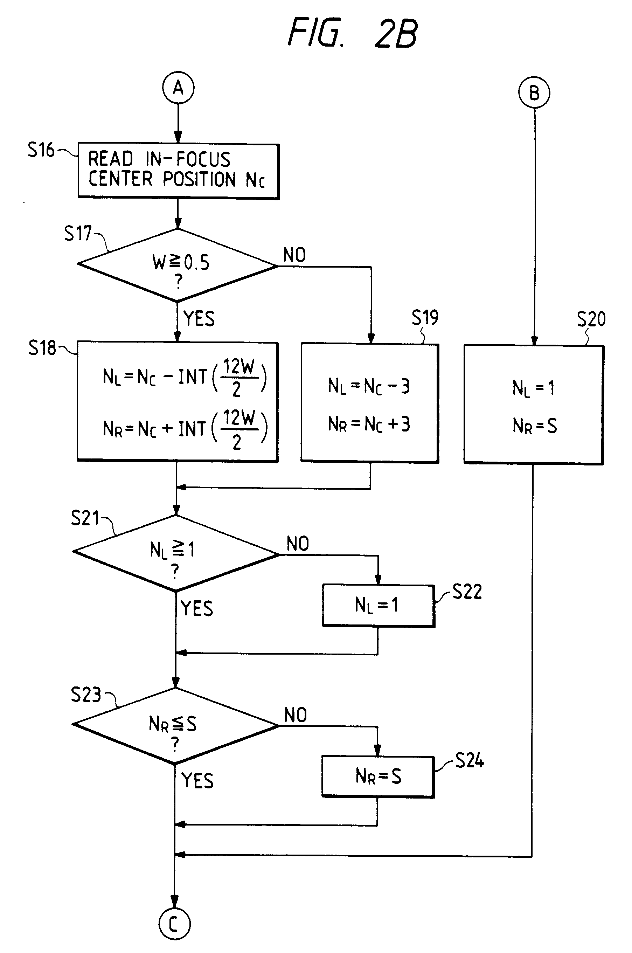

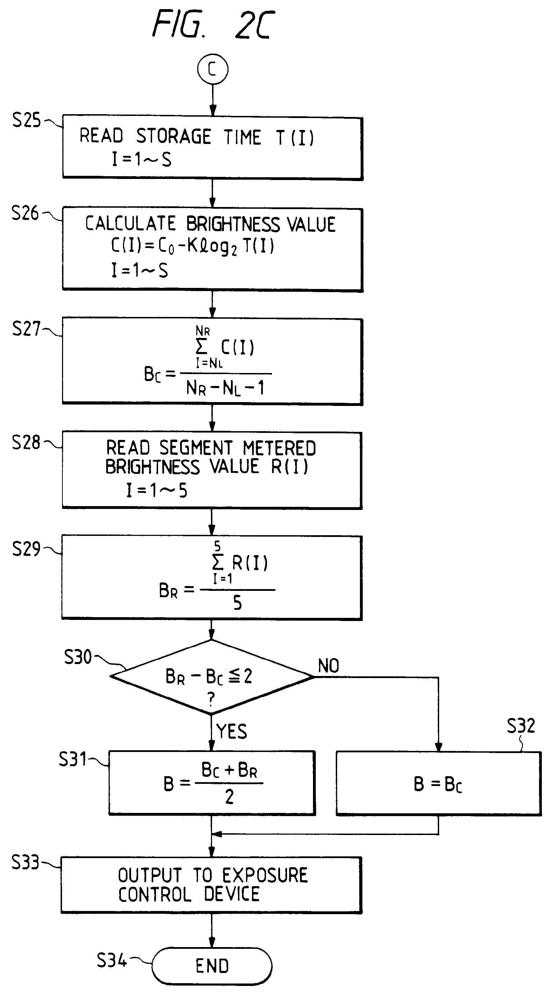

A calculation process in the present embodiment is now explained with reference to Figs. 2A to 2C.

In a step S1, the process is started and proceeds to a step S2.

In the step S2, the presence or absence of the attitude detection device 10 of the camera is determined. If the attitude detection device 10 is present, the attitude detection device 10 should be in an activated state. If the attitude detection device 10 is not activated even if it is present, it is determined that the attitude detection device 10 is absent.

If the absence (or non-activated state) is detected in the step S2, the process proceeds to a step S7 where the two horizontally arranged photo-electric conversion device arrays 3a and 3b shown in Fig. 4 are selected from the photo-electric conversion device arrays 3 and the value S is set to 87.

The numbers of the devices of the photo-electric conversion device arrays 3a and 3b are equal, and the value S represents the number of devices arrayed. The photo-electric conversion device arrays 3a and 3b have the devices thereof arranged and overlapped in one-to-one relation on the screen.

They are numbered with 1 through S from the left end to the right end on the screen.

After the value S has been set, the process proceeds to a step S8.

If the presence (and the activated state) is detected in the step S2, the process proceeds to a step S3.

In the step S3, information as to vertical or horizontal attitude of the camera is inputted from the attitude detection device 10. Then, the process proceeds to a step S4.

In the step S4, the vertical attitude or the horizontal attitude is determined. If the vertical attitude is detected, the process proceeds to a step S5.

In the step S5, the two vertically arranged photoelectric conversion device arrays 3c and 3d shown in Fig. 4 are selected from the photo-electric conversion device arrays 3 and the value S is set to 31.

The numbers of the devices of the photo-electric conversion device arrays 3c and 3d are equal, and the value S represents the number of arrays arranged. The photo-electric conversion device arrays 3c and 3d have the devices thereof arranged and overlapped in one-to-one relation. They are numbered with 1 through S from the top end to the bottom end on the screen.

After the value S has been set, the process proceeds to a step S8.

If the horizontal attitude is detected in the step S4, the process proceeds to a step S6. The two horizontally arranged photo-electric conversion device arrays 3a and 3b shown in Fig. 4 are selected from the photo-electric conversion device arrays 3, and the value S is set to 87. Then, the process proceeds to the step S8.

In the step S8, the photographing magnification f/x which is a ratio of the focal length f (mm) of the imaging lens 1 and the photographing distance x (mm) is selected from various distance information supplied by the distance information output device 6. Then, the process proceeds to a step S9.

In the step S9, the presence or absence of the photographing scene setting device 7 is determined. If the photographing scene setting device 7 is present, the device should be in a set state. If the device is in a non-set state even if it is present, it is determined as the absence of the device 7.

If the decision is absent (or non-set state), the process proceeds to a step S15.

In the step S15, the following calculation is performed to determine a value W.

$$W = 250 \times \frac{f}{x}$$

where W is a width on the screen of an image of a principal object focused by the imaging lens 1, for which a proper exposure is to be given.

For example, where a lens having a focal length of 50 mm is used to focus an object which is 5 m ahead, the photographing magnification is given by

$$f/x = 50/5000$$
$$= 1/100$$

and

$$W = 250 \times 1/100$$
$$= 2.5 \text{ (mm)}$$

If the photographing scene setting device 7 is absent (or in the non-set state), the setting for a portrait scene to be described later is used. This case is most probably the portrait photographing and improper exposure should be most desirably avoided in the portrait photographing.

After the calculation in the step S15, the process proceeds to a step S16.

If the decision in the step S9 is present (and in the set state), the process proceeds to a step S10.

In the step S10, whether the photographing scene has been set to the portrait scene or not is determined. If the portrait scene has been set, the process proceeds to a step S12.

In the step S12, the value W is determined by the following formula.

$$W = 250 \times \frac{f}{x}$$

a coefficient 250 is a value to define a proper range which has been obtained by statistically processing results of a number of portrait photographing.

Where the portrait scene has been set, the primary object is a person who is static or almost static. Accordingly, the value W which represents the width of the object may be fairly limited.

After the calculation, the process proceeds to the step S16.

If the photographing scene has not been set to the portrait scene in the step S10, the process proceeds to a step S11 to determine if it has been set to a sport scene. If it has been set to the sport scene, the process proceeds to a step S13.

In the step S13, the value W is determined by the following formula.

$$W = 400 \times \frac{f}{x}$$

A coefficient 400 is a value to define a proper range which has been obtained by statistically processing the results of a number of sport scene photographing.

Where the sport scene has been set, the principal object is person, animal or vehicle which moves fast and widely. Accordingly, the value W which represents the width of the object should be set larger than that for the portrait scene.

After the calculation, the process proceeds to the step S16.

If the sport scene has not been set in the step S11, the process proceeds to a step S14.

In the step S14, a landscape scene is set.

Where the landscape scene is set, it is statistically known that it is proper to limit a light metering area by a magnitude of an angle of view rather than a size or distance of a principal object. Accordingly, it is proper to use all devices 1 through S of the photo-electric conversion device arrays instead of the selection by the magnification f/x. Thus, the process proceeds to a step S20.

In the step S16, the selection device 12 determines the device (Fig. 3) in the photo-electric conversion device arrays 3 at which the defocusing is minimum, that is, in-focus is most attained, and reads in the number $N_C$ of that position. $N_C$ is selected from the device positions 1 through S.

In the focus detection, the amount of defocusing is normally determined for each of the devices (not shown) of the photo-electric conversion device arrays 3. If the amount of defocusing is within ± 50 microns, it is usually said that the object is in an in-focus range, and when it is closest to zero, it is said that the object is at an in-focus center. The number $N_C$ is usually defined at the position corresponding to the in-focus center, but in a camera having a tracking device, it may be defined at an anticipated in-focus position. In this case, the position of the in-focus center is used as a reference to define the number $N_C$.

After the number $N_C$ has been read, the process proceeds to a step S17.

In the step S17, the value W is set to 0.5 and whether W $\geqq$ 0.5 is met or not is determined.

W = 0.5 corresponds to 0.5 mm on the screen. This corresponds to a width of a nose of a person who is 5 m ahead of a lens having a focal distance of 50 mm. This is used as the predetermined width. It is a practically significant minimum width.

When W $\geqq$ 0.5, that is, when the width of the principal object is larger than the predetermined width on the image plane, the process proceeds to a step S18.

When W < 0.5, that is, when the width of the principal object is less than the predetermined width on the image plane and too narrow to use it as a light metering area, the process proceeds to a step S19.

In the steps S18 to S20, the number $N_L$ of the device at one end of the devices of the photo-electric conversion device arrays 3a to 3d which are used for the light metering and the number $N_R$ of the device at the other end of the devices used for the light metering are determined. For example, in the horizontal arrangement, the number of the leftmost device of the area $L_1$ of the devices used for the light metering is $N_L$, and the number of the rightmost device is $N_R$, as shown in Fig. 3A. In the vertical arrangement, the number of the uppermost device of the area $L_2$ of the devices used for the light metering is $N_L$, and the number of the lowermost device is $N_R$, as shown in Fig. 3B.

In the step S18, $N_L$ and $N_R$ are determined by the following formulas and the process proceeds to a step S21.

$$N_L = N_C - INT(\frac{12W}{2})$$

$$N_R = N_C + INT(\frac{12W}{2})$$

where INT( ) is an operation symbol which means an integer portion in ( ).

For example, when f = 50 mm and x = 3x10³ mm in the portrait scene,

$$W = 250 \times \frac{50}{3 \times 10^3} = 4.17$$

Accordingly,

$N_L = N_C - 25$
$N_R = N_C + 25$

Thus, 25 devices on both sides of $N_C$ as center, that is, 51 devices in total are used for the light metering out of the photo-electric conversion device arrays 3.

In another example, when f = 200 mm and x = 20 x 10³ mm in the sport scene,

$$W = 250 \times \frac{200}{20 \times 10^3} = 2.5$$

Accordingly,

$N_L = N_C - 15$
$N_R = N_C + 15$

Thus, 15 devices on both sides of $N_C$ (as center) that is, 31 devices in total are used for the light metering out of the photo-electric conversion device arrays 3. Then, the process proceeds to the step S21.

In the step S19,

$N_L = N_C - 3$
$N_R = N_C + 3$

Thus, 3 devices on both sides of $N_C$, as center that is, seven devices in total are used for the light metering. Then, the process proceeds to the step S21.

In the step S21, if $N_L < 1$, the process proceeds to a step S22. In the step S22, $N_L$ is set to 1 and the process proceeds to a step S23.

In the step S21, if $N_L \geqq 1$, the process proceeds to the step S23.

In the step S23, if $N_R > S$, the process proceeds to a step S24. In the step S24, the $N_R$ is set to S and the process proceeds to a step S25.

In the step S23, if $N_R \leqq S$, the process proceeds to the step S25.

The processes in the steps S21 to S24 are to prevent $N_L$ or $N_R$ from being smaller than 1 or larger than S to go out of the range of the photo-electric conversion device arrays 3.

In the step S20,

$N_L = 1$
$N_R = S$

Thus, entire arrays of the selected photo-electric conversion device arranges 3a and 3b, that is, 87 devices of each of the photo-electric conversion device arrays 3a and 3b when the camera is in the horizontal attitude, and 31 devices of each of the photo-electric conversion device arrays 3c and 3d when the camera is in the vertical attitude are used for the light metering. For the landscope scene, the devices are used widely because the angle of view of the principal object is usually large.

In the step S25, storage times T(I) of the S devices of each of the photo-electric conversion device arrays 3a to 3d are read. Then, the process proceeds to a step S26.

In the step S26, the brightness value for each device is calculated by the formula

$$C(I) = Co - K \log_2 T(I)$$

where Co is a conversion constant and K is a conversion coefficient.

In the steps S25 and S26, as an alternative method for calculating the brightness value from the stored charge and the storage time by the brightness calculation device 11, the stored charge in a fixed storage time may be read. In the present embodiment, however, to storage time T(I) is read.

In a step S27, the brightness value $B_C$ of the area $L_1$ or $L_2$ of the devices selected for the light metering is calculated by the exposure calculation device 13 by the following formula.

$$B_C = \frac{\sum_{I=N_L}^{N_R} C(I)}{N_R - N_L - 1}$$

Then, the process proceeds to a step S28. In the step S28, the five light metering brightness values R(I) are read from the light metering devices 8 through the light metering circuit 9. Then, the process proceeds to a step S29.

In the step S29, the brightness value $B_R$ for the entire image is calculated by the following formula.

$$B_R = \frac{\sum_{I=1}^{5} R(I)}{5}$$

Then, the process proceeds to a step S30.

In the step S30, when $B_R - B_C \leq 2$, that is, when a difference between the brightness values at the center of the image and the entire image is small, the process proceeds to a step S31.

In the step S31, a brightness value B is calculated by the following formula.

$$B = \frac{B_C + B_R}{2}$$

Namely, a mean value of the brightness values at the center of the image and the entire image are calculated to make the entire image harmonious.

If $B_R - B_C > 2$ in the step S30, that is, when the center of the image is lighter than the entire image by more than 2 EV, the process proceeds to a step S32.

In the step S32, the brightness value B is calculated by the following formula.

$$B = B_C$$

Namely, the brightness at the center of the image rather than the brightness of the entire image is adopted to set a proper exposure such that the principal object is clearly displayed in the entire image.

The calculation by the exposure calculation device 13 is completed in the step S31 or S32. The process then proceeds to a step S33.

In the step S33, the brightness value B is finally supplied to the exposure control device.

In accordance with the present invention, the range of the principal object can be more precisely determined than by the classification, by using the setting of the photographing scene by the photographer.

The brightness output to be used for the exposure calculation is selected from the brightness outputs generated by the light metering device, based on the output of the photographing scene setting device which is set by the photographer.

As a result, the statistic misjudgement is less than that by the scene classification, and the principal object can be caught more precisely and the probability of proper exposure is improved.

Accordingly, the photographer may more easily photograph with proper exposure.

## Claims

1. A camera comprising:
   light receiving means (3, 8) for receiving light in a plurality of areas corresponding to a plurality of areas of an object field and generating a plurality of brightness signals corresponding to said plurality of areas;
   photographing scene setting means (7) for producing first information, said photographing scene setting means being responsive to an operation by a photographer for setting parameters corresponding to a photographing scene selected from a predetermined plurality of different types of object scenes;
   exposure determining means (12, 13) for determining an exposure value based on said plurality of brightness signals wherein said exposure determining means comprises selecting means (12) for selecting a part of said plurality of brightness signals on the basis of said first information and calculation means (13) for calculating the exposure value on the basis of the selected part of brightness signals,
   **characterized in that**
   the camera further comprises condition detecting means (4, 6, 10) for producing second information, said condition detecting means (4, 6, 10) including a focus condition detecting means (4) for detecting a focus condition of a photographing lens (1) on the basis of said plurality of signals, wherein said second information comprises information related to a focal length of said photographing lens (1) and to a distance from said camera to an object in the object field, and in that said selecting means (12) is adapted to select a part of said plurality of brightness signals on the basis of said first and second information.

2. A camera according to claim 1, wherein said condition detecting means (4, 6, 10) includes attitude detection means (10) which detect information concerning the vertical or horizontal camera position to produce an attitude signal and preselects a part of said plurality of brightness signals in response to said attitude signal.

3. A camera according to claim 1, wherein said photographing scene setting means (7) is capable of setting a sport scene in which a primary object moves.

4. A camera according to claim 1, wherein said photographing scene setting means (7) is capable of setting a static scene in which a primary object is static.

5. A camera according to claims 3 and 4, wherein the number of said selected brightness signals in said sport scene is larger than the number of said selected brightness signals in said portrait scene.

6. A camera according to claim 1, wherein said photographing scene means (7) is capable of setting a landscape scene.

**Patentansprüche**

1. Eine Kamera, welche umfaßt:
eine Lichtempfangseinrichtung (3, 8) zum Empfangen von Licht in einer Vielzahl von Bereichen, die einer Vielzahl von Bereichen in einem Objektfeld entsprechen, und zum Erzeugen einer Vielzahl von Helligkeitssignalen, die der Vielzahl von Bereichen entsprechen;
eine Fotografieszeneneinstelleinrichtung zum Erzeugen einer ersten Information, wobei die Fotografieszeneneinstelleinrichtung auf eine Betätigung durch einen Fotografen zum Einstellen von Parametern reagiert, welche einer Fotografieszene entsprechen, die aus einer vorbestimmten Vielfalt von unterschiedlichen Arten von Objektszenen ausgewählt ist;
eine Belichtungsbestimmungseinrichtung (12, 13) zum Bestimmen eines Belichtungswertes basierend auf der Vielzahl von Helligkeitssignalen, wobei die Belichtungsbestimmungseinrichtung eine Auswahleinrichtung (12) zum Auswählen eines Teils von der Vielzahl von Helligkeitssignalen auf der Basis der ersten Information und eine Berechnungseinrichtung (13) zum Berechnen des Belichtungswertes auf der Basis des ausgewählten Teils von Helligkeitssignalen umfaßt,
**dadurch gekennzeichnet,**
daß die Kamera ferner eine Zustandserfassungseinrichtung (4, 6, 10) zum Erzeugen einer zweiten Information umfaßt, wobei die Zustandserfassungseinrichtung (4, 6, 10) eine Brennpunktzustandserfassungseinrichtung (4) zum Erfassen eines Brennpunktzustands einer Fotografierlinse (1) auf der Basis der Vielzahl von Signalen enthält, wobei die zweite Information Information umfaßt, welche sich auf eine Brennweite der Fotografierlinse (1) und einen Abstand von der Kamera zu einem Objekt in dem Objektfeld bezieht, und daß
die Auswahleinrichtung (12) dazu vorgesehen ist, einen Teil von der Vielzahl von Helligkeitssignalen auf der Basis der ersten und zweiten Information auszuwählen.

2. Eine Kamera nach Anspruch 1, wobei die Zustandserfassungseinrichtung (4, 6, 10) eine Lageerfassungseinrichtung (10), welche Information bezüglich einer vertikalen oder horizontalen Kameralage erfaßt, um ein Lagesignal zu erzeugen, enthält, und einen Teil der Vielzahl von Helligkeitssignalen in Reaktion auf das Lagesignal auswählt.

3. Eine Kamera nach Anspruch 1, wobei die Fotografieszeneneinstelleinrichtung (7) in der Lage ist, eine Sportszene einzustellen, in welcher sich ein primäres Objekt bewegt.

4. Eine Kamera nach Anspruch 1, wobei die Fotografieszeneneinstelleinrichtung (7) in der Lage ist, eine statische Szene einzustellen, in welcher ein primäres Objekt in Ruhe ist.

5. Eine Kamera nach Anspruch 3 und 4, wobei die Anzahl der ausgewählten Helligkeitssignale in der Sportszene größer als die Anzahl von ausgewählten Helligkeitssignalen in der Portraitszene ist.

6. Eine Kamera nach Anspruch 1, wobei die Fotografieszeneneinstelleinrichtung (7) in der Lage ist, eine Landschaftsszene einzustellen.

**Revendications**

1. Appareil photographique comprenant :
des moyens récepteurs de lumière (3, 8) pour recevoir de la lumière dans une série de zones correspondant à une série de zones d'un champ objet et produire une série de signaux de brillance correspondant à ladite série de zones,

des moyens de réglage de la scène photographiée pour produire des premières informations, lesdits moyens de réglage de la scène photographiée étant sensibles à une opération effectuée par un photographe pour régler des paramètres correspondant à une scène photographiée sélectionnés parmi une série prédéterminée de différents types de scènes objet,

des moyens de détermination d'exposition (12, 13) pour déterminer une valeur d'exposition fondée sur ladite série de signaux de brillance, lesdits moyens de détermination d'exposition comprenant des moyens de sélection (12) pour sélectionner une partie de ladite série de signaux de brillance sur la base desdites premières informations, et des moyens de calcul (13) pour calculer la valeur d'exposition sur la base de la partie sélectionnée des signaux de brillance, caractérisé en ce que :

l'appareil photographique comprend par ailleurs des moyens de détection de conditions (4, 6, 10) pour produire des deuxièmes informations, lesdits moyens de détection de conditions (4, 6, 8) comprenant des moyens de détection des conditions focales (4) pour détecter la condition focale d'un objectif photographique (1) sur la base de ladite série de signaux, lesdites deuxièmes informations comprenant des informations apparentées à une longueur focale dudit objectif photographique (1) et à une distance entre ledit appareil photographique et un objet dans le champ objet, et en ce que

lesdits moyens de sélection (12) sont à même de sélectionner une partie de ladite série de signaux de brillance sur la base des premières et des deuxièmes informations.

2. Appareil photographique selon la revendication 1, dans lequel lesdits moyens de détection de conditions (4, 6, 10) comprennent des moyens de détection d'attitude (10) qui détectent des informations concernant la position verticale ou horizontale de l'appareil photographique pour produire un signal d'attitude, et présélectionnent une partie de ladite série de signaux de brillance en réponse audit signal d'attitude.

3. Appareil photographique selon la revendication 1, dans lequel lesdits moyens de réglage de la scène photographique (7) sont à même de régler une scène de sport dans laquelle un objet principal se déplace.

4. Appareil photographique selon la revendication 1, dans lequel lesdits moyens de réglage de la scène photographique (7) sont à même de régler une scène statique dans laquelle un objet principal est statique.

5. Appareil photographique selon les revendications 3 et 4, dans lequel le nombre desdits signaux de brillance sélectionnés dans ladite scène de sport est plus important que le nombre desdits signaux de brillance sélectionnés dans ladite scène de portrait.

6. Appareil photographique selon la revendication 1, dans lequel lesdits moyens de réglage de la scène photographique (7) sont à même de régler une scène de paysage.

FIG. 1

FIG. 2A

S1 — START

S2 — ATTITUDE DETECTION DEVICE ? — ABSENT

PRESENT

S3 — INPUT VERTICAL / HORIZONTAL INFORMATION

S4 — VERTICAL / HORIZONTAL ?

VERTICAL

HORIZONTAL

S5 — SELECT VERTICAL ARRANGEMENT S = 31

S6 — SELECT HORIZONTAL ARRANGEMENT S = 87

S7 — SELECT HORIZONTAL ARRANGEMENT S = 87

S8 — INPUT f / x

S9 — PHOTOGRAPHING SCENE SETTING DEVICE ?

ABSENT

PRESENT

S10 — PORTRAIT SCENE ? — NO

S11 — SPORTS SCENE ? — NO

YES

YES

S15 — $W = 250 \times \dfrac{f}{x}$

S12 — PORTRAIT $W = 250 \times \dfrac{f}{x}$

S13 — SPORT $W = 400 \times \dfrac{f}{x}$

LANDSCAPE

S14

A

B

10

# FIG. 2B

S16 — READ IN-FOCUS CENTER POSITION $N_C$

S17 — $W \geqq 0.5$ ?

NO → 

YES

S18 — 
$$N_L = N_C - INT\left(\frac{12W}{2}\right)$$
$$N_R = N_C + INT\left(\frac{12W}{2}\right)$$

S19 — 
$$N_L = N_C - 3$$
$$N_R = N_C + 3$$

S20 — 
$$N_L = 1$$
$$N_R = S$$

B

S21 — $N_L \geqq 1$ ?

NO → S22 — $N_L = 1$

YES

S23 — $N_R \leqq S$ ?

NO → S24 — $N_R = S$

YES

C

# FIG. 2C

( C )

S25 — READ STORAGE TIME T(I)
$I = 1 \sim S$

S26 — CALCULATE BRIGHTNESS VALUE
$C(I) = C_0 - K\log_2 T(I)$
$I = 1 \sim S$

S27 — $$B_C = \frac{\sum_{I=N_L}^{N_R} C(I)}{N_R - N_L - 1}$$

S28 — READ SEGMENT METERED
BRIGHTNESS VALUE R(I)
$I = 1 \sim 5$

S29 — $$B_R = \frac{\sum_{I=1}^{5} R(I)}{5}$$

S30 — $B_R - B_C \leqq 2$ ?

NO

YES

S31 — $$B = \frac{B_C + B_R}{2}$$

S32 — $B = B_C$

S33 — OUTPUT TO EXPOSURE
CONTROL DEVICE

S34 — END

12

*FIG. 3A*

3a, 3b

1  2  3          $N_L$          44    $N_C$          $N_R$    87

$L_1$

*FIG. 3B*

3c, 3d          1

$N_L$

$N_C$          $L_2$

$N_R$

31

*FIG. 4*

3c, 3d          3a, 3b

8b                          8c

8d                          8e

8a

13